# EUROPEAN PATENT APPLICATION

(11) **EP 3 835 348 A1**
(43) Date of publication of application: **16.06.2021**
(21) Application number: 19848658.1
(22) Date of filing: 06.08.2019
(51) Int. Cl.: C08K 5/20, C08L 23/12

(54) **USE OF ETHOXYAMIDE POLYMER AS COMBUSTION-SLOWING AGENT, LOW-ODOR COMBUSTION-SLOWING POLYOLEFIN COMPOSITION AND PREPARATION METHOD THEREOF**

(30) Priority: 07.08.2018 CN 201810890056
(71) Applicant: KINGFA SCI. & TECH. CO., LTD., Guangzhou, Guangdong 510663 (CN)
(72) Inventor: YU, Fei, Guangzhou Guangdong 510663 (CN); HUANG, Xianbo, Guangzhou Guangdong 510663 (CN); LUO, Zhongfu, Guangzhou Guangdong 510663 (CN); YE, Nanbiao, Guangzhou Guangdong 510663 (CN); DING, Zhengya, Guangzhou Guangdong 510663 (CN); YANG, Bo, Guangzhou Guangdong 510663 (CN); WU, Guofeng, Guangzhou Guangdong 510663 (CN); CHEN, Jiajie, Guangzhou Guangdong 510663 (CN)
(74) Representative: dompatent von Kreisler Selting Werner - Partnerschaft von Patent- und Rechtsanwälten mbB
(86) International application number: PCT/CN2019/099358
(87) International publication number: WO 2020/029940

(57) **Abstract**

Disclosed is a low-odor combustion-delaying polyolefin composition, which includes the following components by weight percentage: 56% to 99.7% of polyolefin; 0.3% to 2% of an ethoxyamide polymer; 0% to 2% of a delay combustion synergist; and 0% to 40% of a filler. Disclosed is also a use of the ethoxyamide polymer as a delay combustion agent in the polyolefin composition.

## Description

### TECHNICAL FIELD

The present invention relates to the technical field of new polymer materials, and particularly relates to a use of an ethoxyamide polymer as a delay combustion agent, a low-odor combustion-delaying polyolefin composition and a preparation method thereof.

### BACKGROUND

With the development of social informatization and intelligence, lightweighting of the automobile industry is undoubtedly an important development direction, which requires the thickness of auto parts to be thinned to achieve lightweight and fuel consumption reduction. At present, most automobile OEMs are developing towards this direction, reducing wall thickness from the original 3.0 mm to 2.0 mm, or even to 1.0 mm. The thinning of the wall thickness will inevitably bring to an increase in a combustion speed, but the industry or OEMs has not reduced the standard of the combustion speed (GB 8410 requires the combustion speed to be ≤ 100 mm/min, and some OEMs require the combustion speed to be ≤ 81 mm/min), which brings a relatively big problem to modified plastics. At present, to achieve the purpose of retarding combustion, it is necessary to add a flame retardant, especially a brominated flame retardant, which has direct negative impacts on automotive interior materials that are problems of odor and TVOC.

In the prior art applications, ethoxyamide polymers are mainly used as antistatic agents.

### SUMMARY

An objective of the present invention is to overcome the above technical defects and provide a use of an ethoxyamide polymer as a delay combustion agent, which has advantages of a low additive amount, a good combustion-delaying effect and a low odor.

Another objective of the present invention is to provide a low-odor combustion-delaying polyolefin composition and a preparation method thereof, which includes the ethoxyamide polymer as the delay combustion agent and has the advantages of the good combustion-delaying effect and the low odor.

The present invention is realized through the following technical solutions.

A use of an ethoxyamide polymer as a delay combustion agent, wherein 0.3% to 2% of the ethoxyamide polymer is included in a polyolefin composition based on a weight percentage of the polyolefin composition.

The ethoxyamide polymer is selected from at least one of stearic acid ethoxyamide, lauric acid ethoxyamide, cocinic acid ethoxyamide and other ethoxyamide polymers.

Further, 0% to 2% of a combustion-delaying synergist is also included by weight percentage. The combustion-delaying synergist is selected from at least one of a phosphate. The phosphate is selected from at least one of aluminum hypophosphite, calcium hypophosphite, dimethyl aluminum hypophosphite, diethyl aluminum hypophosphite and methyl ethyl aluminum hypophosphite.

A low-odor combustion-delaying polyolefin composition includes the following components by weight percentage:

| | |
|---|---|
| polyolefin | 56% to 99.7%; |
| an ethoxyamide polymer | 0.3% to 2%; |
| a combustion-delaying synergist | 0% to 2%; and |
| a filler | 0% to 40%. |

The polyolefin is selected from at least one of polypropylene and polyethylene.

The ethoxyamide polymer is selected from at least one of ethoxyamide polymers such as stearic acid ethoxyamide, lauric acid ethoxyamide and cocinic acid ethoxyamide.

The filler is selected from at least one of talc powder, calcium carbonate, montmorillonite, clay and kaolin.

The combustion-delaying synergist is selected from at least one of a phosphate; the phosphate is selected from at least one of aluminum hypophosphite, calcium hypophosphite, dimethyl aluminum hypophosphite, diethyl aluminum hypophosphite and methyl ethyl aluminum hypophosphite.

0% to 5% of an auxiliary agent is further included by weight percentage, and the auxiliary agent is selected from at least one of a lubricant, an antioxidant and a light stabilizer.

A preparation method of the combustion-delaying polyolefin composition according to the present invention includes the following steps:
weighing each material according to weight percentages, then adding the polyolefin, the ethoxyamide polymer, the combustion-delaying synergist, the filler and the auxiliary agent into a high-speed mixer, mixing them evenly, and then adding the mixed materials into an extruder for extrusion and granulation, to obtain the low-odor combustion-delaying polyolefin composition, wherein a screw temperature is 180°C to 220°C.

The present invention has the following beneficial effects.

The ethoxyamide polymer of the present invention is added to the polyolefin composition as the delay combustion agent, with an additive amount of only 0.2% to 3%, making the combustion-delaying polyolefin composition with the advantages of the good combustion-delaying effect and the low odor. Further, no more than 2% of the combustion-delaying synergist is also added to further enhance the combustion-delaying effect while maintaining the low odor.

### DETAILED DESCRIPTION

The present invention will be illustrated below in combination with embodiments, but the present invention is not limited by the following embodiments.

Sources of raw materials used in the present invention are as follows:
stearic acid ethoxyamide: A4-88, purchased from Zhejiang Java;
lauric acid ethoxyamide: A-2000, purchased from Zhejiang Java;
polypropylene: PP N-Z30S, purchased from Sinopec;
talc powder: AH51210, purchased from Liaoning Aihai;
aluminum hypophosphite: OP1314, purchased from Clariant, Switzerland;
flame retardant A: decabromodiphenylethane (8010), purchased from Albemarle Corporation, USA;
flame retardant B: diantimony trioxide, purchased from Yiyang Hengchang Antimony White Factory;
flame retardant C: halogen-free nitrogen phosphorus flame retardant WR02, purchased from Suzhou Enhand;
lubricant: BS-2818, purchased from Shenzhen Huamingtai;
antioxidant 1010: SONOX 1010, purchased from Shandong Sanfeng;
antioxidant 168: SONOX 168, purchased from Shandong Sanfeng.

The remaining raw materials are purchased commercially.

A preparation method of a polyolefin composition in the embodiments and comparative examples: polyolefin, an ethoxyamide polymer (or a flame retardant), a combustion-delaying synergist, a filler and an auxiliary agent were weighed according to weight percentages, added into a high-speed mixer and mixed evenly, and then the mixed materials were added into an extruder for extrusion and granulation, to obtain the polyolefin composition.

Test methods for each performance:
(1) Combustion test: test according to GB8410 standard, size of 365^{∗}100^{∗}1.0 mm, unit as mm/min;
(2) Odor level: test according to PV3900 standard of Volkswagen OEM, 20 g, at 80°C, for 2 hours, unit as level;
(3) TVOC: according to PV3341 standard of Volkswagen OEM, unit as µg C/g.

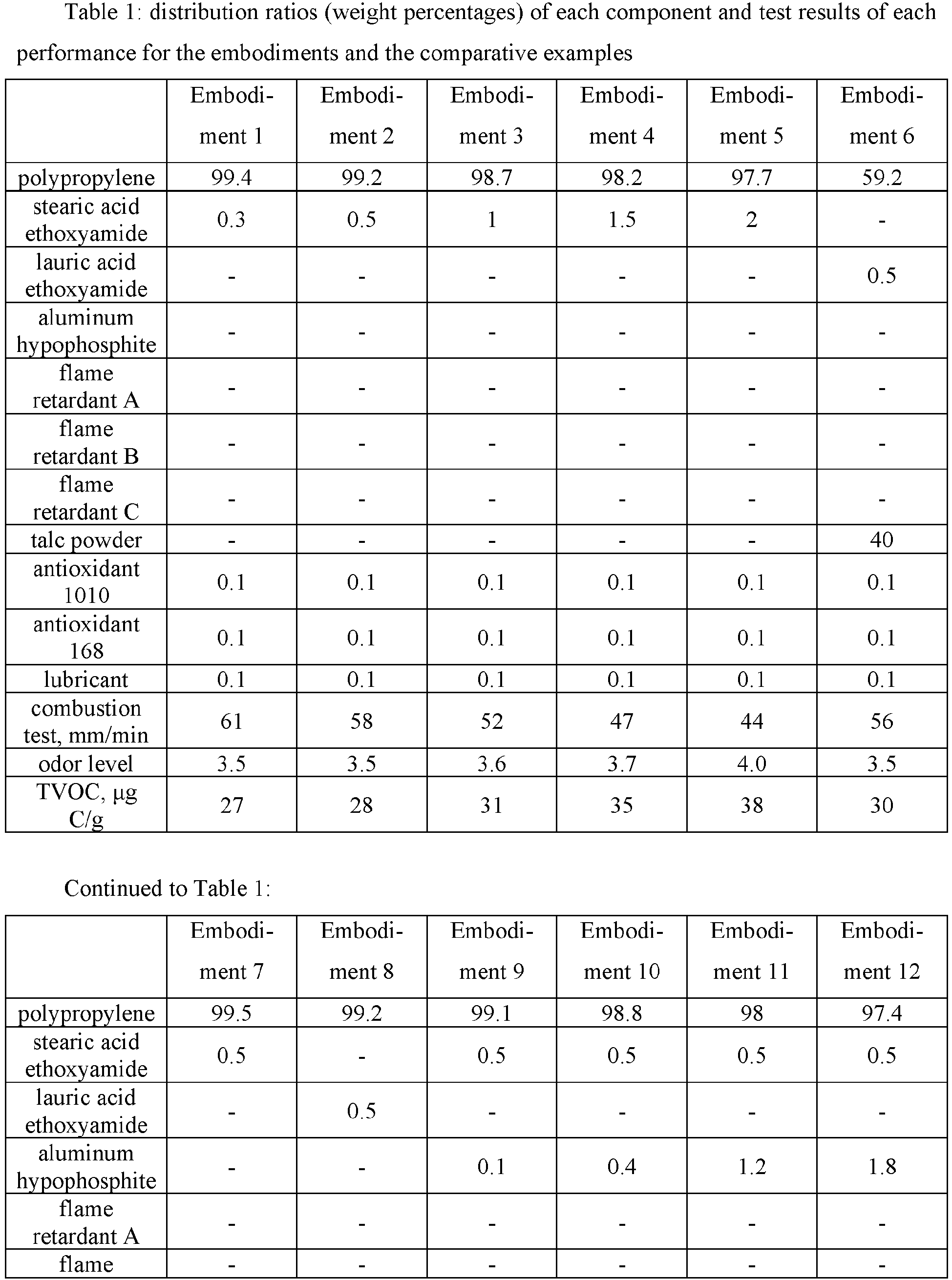

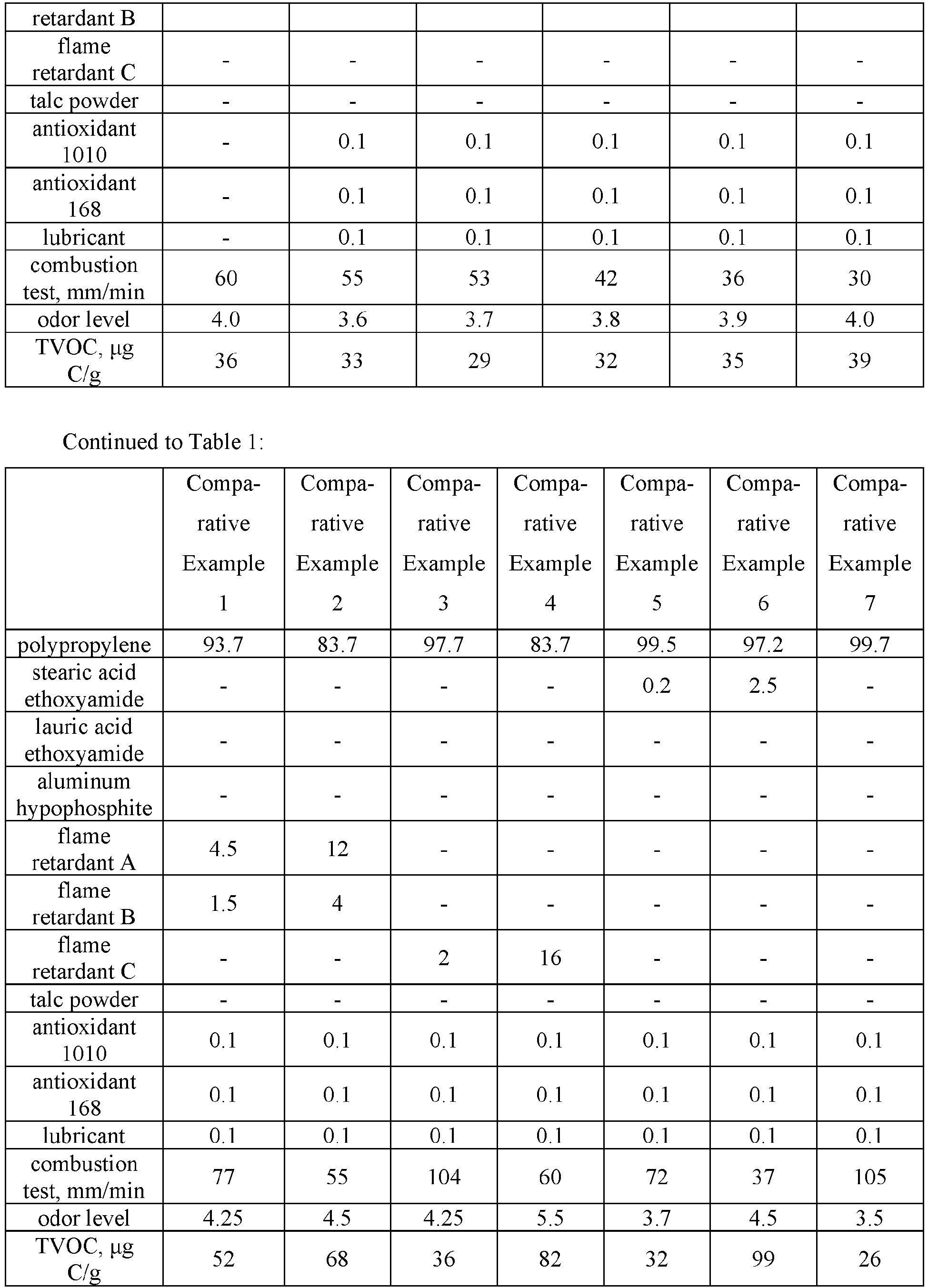

It can be seen from Embodiment 1 to Embodiment 5 that with an increased amount of the stearic acid ethoxyamide, a combustion-delaying performance increases. It can be seen from Embodiment 9 to Embodiment 12 that with an increased amount of the aluminum hypophosphite, the combustion-delaying performance increases. It can be seen from the embodiments and Comparative Example 1 to Comparative Example 4 that compared with traditional flame retardant formulations brominated flame retardants, antimony compound-containing compound flame retardants and halogen-free nitrogen phosphorus flame retardants, the ethoxyamide polymer as the delay combustion agent only needs to be added in a small amount to achieve the excellent combustion-delaying performance, and has a low odor level and low TVOC. It can be seen from Comparative Example 5 to Comparative Example 6 that when the amount of the stearic acid ethoxyamide is only 0.2%, the combustion-delaying performance is insufficient, and even the odor is worse compared with Embodiment 1; and when the amount of the stearic acid ethoxyamide is 2.5%, compared with Embodiment 5, the combustion-delaying performance only slightly improves while the odor level increases by 0.5 and TOVC greatly increases by 61 µg C/g.

## Claims

1. A use of an ethoxyamide polymer as a delay combustion agent, wherein 0.3% to 2% of the ethoxyamide polymer is comprised in a polyolefin composition based on a weight percentage of the polyolefin composition.

2. The use of the ethoxyamide polymer as the delay combustion agent according to claim 1, wherein the ethoxyamide polymer is selected from at least one of stearic acid ethoxyamide, lauric acid ethoxyamide and cocinic acid ethoxyamide.

3. The use of the ethoxyamide polymer as the delay combustion agent according to claim 1, wherein 0% to 2% of a combustion-delaying synergist is further comprised by weight percentage, and the combustion-delaying synergist is selected from at least one of a phosphate; and the phosphate is selected from at least one of aluminum hypophosphite, calcium hypophosphite, dimethyl aluminum hypophosphite, diethyl aluminum hypophosphite and methyl ethyl aluminum hypophosphite.

4. A low-odor combustion-delaying polyolefin composition comprising the following components by weight percentage:
| | |
|---|---|
| polyolefin | 56% to 99.7%; |
| an ethoxyamide polymer | 0.3% to 2%; |
| a combustion-delaying synergist | 0% to 2%; and |
| a filler | 0% to 40%. |

5. The low-odor combustion-delaying polyolefin composition according to claim 4, wherein the polyolefin is selected from at least one of polypropylene and polyethylene.

6. The low-odor combustion-delaying polyolefin composition according to claim 4, wherein the ethoxyamide polymer is selected from at least one of stearic acid ethoxyamide, lauric acid ethoxyamide and cocinic acid ethoxyamide.

7. The low-odor combustion-delaying polyolefin composition according to claim 4, wherein the filler is selected from at least one of talc powder, calcium carbonate, montmorillonite, clay and kaolin.

8. The low-odor combustion-delaying polyolefin composition according to claim 4, wherein the combustion-delaying synergist is selected from at least one of a phosphate; and the phosphate is selected from at least one of aluminum hypophosphite, calcium hypophosphite, dimethyl aluminum hypophosphite, diethyl aluminum hypophosphite and methyl ethyl aluminum hypophosphite.

9. The low-odor combustion-delaying polyolefin composition according to claim 4, wherein 0% to 5% of an auxiliary agent is further comprised by weight percentage, and the auxiliary agent is selected from at least one of a lubricant, an antioxidant and a light stabilizer.

10. A preparation method of the low-odor combustion-delaying polyolefin composition according to claim 9, comprising the following steps: weighing each material according to weight percentages, then adding the polyolefin, the ethoxyamide polymer, the combustion-delaying synergist, the filler and the auxiliary agent into a high-speed mixer, mixing them evenly, and then adding the mixed materials into an extruder for extrusion and granulation, to obtain a low-odor combustion-delaying polyolefin composition, wherein a screw temperature is 180°C to 220°C.
